# EUROPÄISCHE PATENTSCHRIFT

(11) **EP 0 624 298 B1**
(45) Veröffentlichungstag und Bekanntmachung des Hinweises auf die Patenterteilung: **16.10.1996**
(21) Anmeldenummer: 93901621.8
(22) Anmeldetag: 04.01.1993
(51) Int. Cl.: H04M 3/42, H04M 3/54, H04Q 3/54

(54) **KOMMUNIKATIONSSYSTEM ZUR HERSTELLUNG VON FERNMELDEVERBINDUNGEN, INSBESONDERE FAKSIMILE- UND FERNSPRECHVERBINDUNGEN**
COMMUNICATIONS SYSTEM FOR REMOTE CONNECTIONS, ESPECIALLY FAX AND TELEPHONE LINKS
SYSTEME DE COMMUNICATION POUR L'ETABLISSEMENT DE LIAISONS DE TELECOMMUNICATION, EN PARTICULIER DE LIAISONS FAX ET TELEPHONIQUES

(30) Priorität: 31.01.1992 DE 4202817
(43) Veröffentlichungstag der Anmeldung: 17.11.1994
(73) Patentinhaber: SIEMENS AKTIENGESELLSCHAFT, 80333 München (DE)
(72) Erfinder: DROBEK, Erich, D-82008 Unterhaching (DE)
(86) Internationale Anmeldenummer: DE9300002
(87) Internationale Veröffentlichungsnummer: WO9315582

(56) Entgegenhaltungen:
- EP-A- 0 460 405
- DE-A- 3 244 807
- US-A- 5 047 923

## Beschreibung

Es sind unterschiedliche Kommunikationssysteme bekannt, die neben der eigentlichen Vermittlungssteuerung auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt ist. Zu solchen Leistungsmerkmalen zählen beispielsweise die Darstellung von Bedienerhinweisen auf optischen Anzeigeeinrichtungen der Endgeräte, Anrufumleitung (Call forwarding) und das Zusammenfassen interner Endgeräte zu Sammelanschlüssen.

Aus den Produktschriften der Fa. Siemens "HICOM 600 System Product Data", Bestell-Nr. A19100-K3161-G430-01-7600 (Seite 6), und "ISDN in the Office", Special Issue of Telcom Report and Siemens Magazin COM, Seiten 56 bis 64, ISBN 3-8009-3849-9 ist bereits ein derartiges Kommunikationssystem bekannt, das für mehrere Kommunikationsdienste einschließlich Sprache und Faksimile ausgestaltet ist. An dieses System sind sogenannte integrierte Server anschließbar, das sind Erweiterungsmodule zur Grundanlage auf der Basis gleicher Hard- und Software wie die Zentraleinheit. Dadurch ergibt sich eine einfache und einheitliche Bedieneroberfläche aller Funktionen. Ein derartiger integrierter Server für den Kommunikationsdienst Faksimile ist in der Produktschrift der Fa. Siemens "System Hicom 300, Tele-Communications-Service", Systembeschreibung A19100-K3163-G585, Seiten 1 - 8, beschrieben. Ferner ist aus der deutschen DE-OS 3 244 807 ein Verfahren zur Übertragung von Datendienstinformationen über eine Datenzentrale bekannt. Bei dem bekannten Verfahren hat eine Steuerung einer Datenzentrale die gemeinsam mit der eigentlichen Datendienstinformation an die Datenzentrale übermittelte Signalisierungsinformation darauf zu überprüfen, ob diese Signalisierungsinformation einen Empfänger ohne ein entsprechendes Datenempfangsgerät kennzeichnet. Bei einem positiven Ergebnis der Überprüfung werden die eintreffenden Datendienstinformationen in einem Speicher abgespeichert. Dabei werden die eigentlichen Datendienstinformationen, z. B. Faxnachrichten, jedoch nicht empfängerindividuell abgespeichert, so daß die abgespeicherten Daten "manuell" zum jeweiligen Empfänger zuzuordnen sind, was insbesondere bei größeren Mengen abgespeicherter Daten einen erheblichen Aufwand verursacht.

Der Erfindung liegt die Aufgabe zugrunde, ein Kommunikationssystem der eingangs genannten Art anzugeben, das eine empfängerindividuelle Abspeicherung von Fernmeldenachrichten mit einer nur geringfügigen Änderung der vermittlungstechnischen Prozeduren ermöglicht.

Die Lösung dieser Aufgabe erfolgt erfindungsgemäß mit den kennzeichnenden Merkmalen des Patentanspruchs 1. Als wesentlich für die Erfindung ist anzusehen, daß die empfängerindividuelle Abspeicherung von Fernmeldenachrichten einerseits unter Verwendung ohnehin vorhandener Teilnehmeranschlußschaltungen und andererseits unter Verwendung des Leistungsmerkmals "Anrufumleitung" erfolgt. Außer der Bereitstellung eines adaptiven Servers zur Aufnahme der Fernmeldenachrichten ist die Hardware des Kommunikationssystems nicht zu ändern. Die Software des Kommunikationssystems ist lediglich hinsichtlich der Anschaltung des adaptiven Servers und damit nur geringfügig zu ändern. Dabei können vorhandene Softwareschnittstellen verwendet werden, die dem Meldungsaustausch zwischen der Steuerung einer externen Datenverarbeitungsanlage und der Steuerung des Kommunikationssystems dienen.

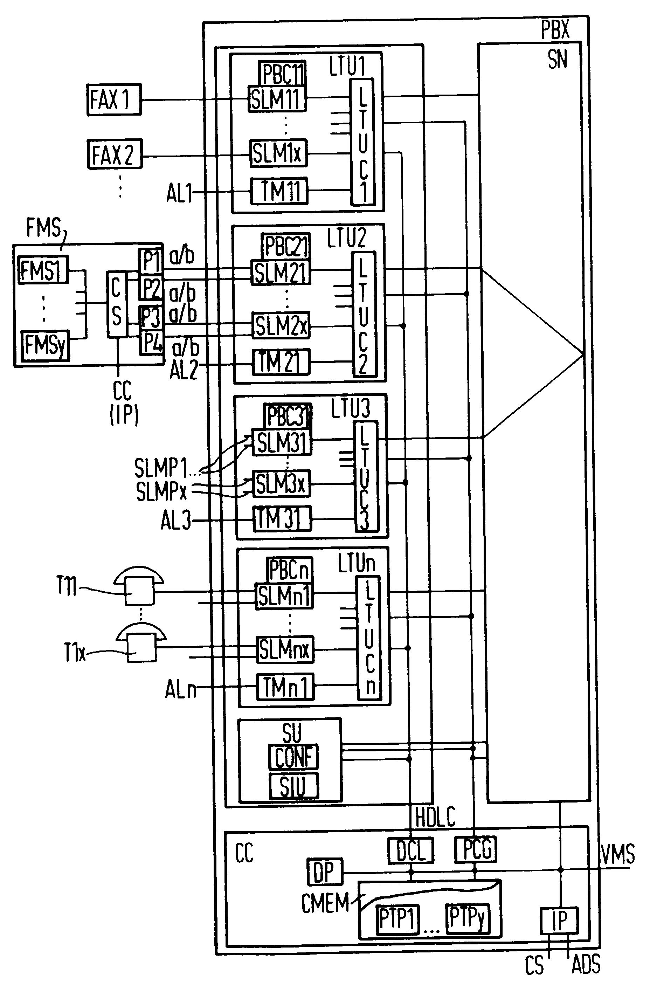

Eine Ausführungsform der Erfindung wird nun anhand der Figur beschrieben.

Das in der Figur dargestellte Kommunikationssystem kann wie das in den eingangs beschriebenen Produktschriften offenbarte System bzw. wie das System strukturiert sein, das in den veröffentlichten europäischen Patentanmeldungen EP 0 306 693 Al (US-PS 4,903,258), EP 0 303 870 A2 (US-PS 5,018,097) und EP 0 303 869 Al (US-PS 5,047,923) offenbart ist. Der Software-Architektur des bekannten Systems liegen die folgenden Kriterien zugrunde: Das erste Architektur-Kriterium betrifft die Dreiteilung der Vermittlungs-Software in die Funktionskomplexe Peripherietechnik PP (peripheral processing), Leitungstechnik DH (device handler) und Vermittlungstechnik CP (call processing). Dabei nimmt die Peripherietechnik PP die Transportfunktion wahr und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architektur-Kriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Gerätetyp ermittelt.

Das dritte Architektur-Kriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Das in der Figur dargestellte Kommunikationssystem besteht aus einer Systemzentrale PBX mit einem Steuerwerk CC ("erste Steuerung"), das mit sogenannten Peripheriemodulen und einem Koppelnetz SN verbindbar ist. Die Peripheriemodule umfassen insbesondere Teilnehmeranschlußschaltungen SLM11...SLMlx, SLM21...SLM2x, SLM31...SLM3x, SLMn1...SLMnx sowie sogenannte Leitungssatzschaltungen TMll, TM21, TM31 und TMnl.

Die Teilnehmeranschlußschaltungen SLM sind teilnehmerorientierte Geräteanschlüsse, wie beispielsweise ISDN-Basisanschlüsse für digitale mono-und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte und Fax-Endgeräte. In der Figur sind beispielhaft zwei interne Fax-Endgeräte F1 und F2 sowie digitale Sprachendgeräte T11...T1x dargestellt. An Teilnehmeranschlußschaltungen SLM21...SLM2x ist über a/b-Adern ein adaptiver Server FMS (Fax Mail Server) angeschlossen. Der Server FMS weist eingangsseitig die a/b-Adern aufnehmenden Ports P1 ...P4 auf, die ihrerseits mit einer ("zweiten") Steuerung CS in Verbindung stehen. Die Steuerungen CS und CC sind über eine Datenleitung miteinander verbunden, über die Meldungen zwischen beiden Steuerungen ausgetauscht werden. Die zweite Steuerung CS speichert, wie noch beschrieben wird, Fernmeldenachrichten in empfängerindividuelle Speicherbereiche FMS1... FMSy ab. An die Teilnehmeranschlußschaltungen SLM31...SLM3x mit Ports SLMP1...SLMPx sind keine Endgeräte angeschlossen. Ferner sind Pseudoteilnehmerports PTP1...PTPy als Verwaltungseinheiten in einem Speicher CMEM der Steuerung CC eingerichtet. Wie noch beschrieben wird, ist jeder Port PTP1...PTPy durch eine Rufnummer adressierbar. Jeder einem Port PTP1... PTPy zugeordnete Anruf bzw. die zugehörige Verbindungsinformation wird um eine den jeweiligen Port bezeichnende Information ergänzt. Für jeden Port ist eine Anrufumleitung zu einem der Ports SLMP1...SLMPx fest eingestellt.

Die Leitungssatzschaltungen TM11, TM21, TM31, TMnl dienen zur Verbindung mit öffentlichen und/oder privaten Netzen bzw. Sondereinrichtungen und sind beispielsweise ISDN-Basisanschlüsse für ISDN-Amtsverkehr (Amtsleitungen AL1, AL2, AL3, ALn) und ISDN-Querverkehr (2 Kanäle zu 64 kBit/s und ISDN-Signalisierung) sowie digitale Schnittstelleneinheiten (digital interface unit), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule SLM11..., TM11... haben die gleichen systeminternen Schnittstellen. Sie koppeln die einzelnen Basiskanäle B, auf denen Nutzdaten, d. h. Sprach- bzw. Fax- und/ oder Dateninformationen übertragen werden, an eine beliebige Auswahl aus zwei Multiplexkanälen (high-ways) mit beispielsweise 32 Kanälen des Koppelnetzes SN und übergeben die in einem Steuerkanal D übertragenen Signalisierungsinformationen als HDLC-Protokoll an die Steuerung CC. Jedes Peripheriemodul weist eine Steuerung PBC11... auf, deren Aufgabe es ist, belegte Anschlußkanäle zu ausgewählten Kanälen der Multiplexkanäle gegebenenfalls mit einer Steuerung LTUC1... einer zugehörigen Anschlußeinheit LTU1... zuzuordnen (europäische Patente 0 113 884 und 0 264 890, US-Patent 4,694,452).

Mehrere Peripheriemodule können funktionell zu einer Anschlußeinheit LTU zusammengefaßt werden. Jeder Anschlußeinheit LTU1 ...LTUn ist eine Steuerung LTUC1...LTUCn zugeordnet und mit dem Koppelnetz SN über beispielsweise vier Sprach-Daten-Multiplexkanäle miteinander verbunden. Der Meldungsaustausch zwischen den Peripheriemodulen und der Steuerung CC erfolgt über einen Signalisierungskanal, der in der Figur mit dem Bezugszeichen HDLC bezeichnet ist, im bekannten HDLC-Punkt- zu -Mehrpunkt-Verfahren.

Mehreren Anschlußeinheiten LTU1...LTUn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen und Amtswähltönen. Diese Funktion wird in an sich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden. Das Steuerwerk CC übernimmt die entsprechend dem Peripherieaufbau anfallende vermittlungstechnische Verarbeitung. Es besteht aus einem Datenprozessor DP, einem Prozessor für Signalisierungssteuerung DCL, einem Taktgenerator PCG, einem Speicher CMEM und einem Schnittstellenprozessor IP, der mit der (zweiten) Steuerung CS des Servers FMS und einer in der Figur nicht dargestellten betriebstechnischen Einheit ADS verbunden ist. Der Speicher CMEM enthält eine Datenbasis mit Konfigurationsdaten, das der Steuerung CC zugeordnete Programm sowie die Verwaltungseinheiten (Pseudoteilnehmerports) PTP1...PTPy. Die genannten Komponenten sind über einen Multibus MB, wie in der Figur dargestellt, miteinander verbunden.

Für den Datenprozessor DP werden vorzugsweise Prozessoren der Reihe SAB 8086/80286 (Fa. Siemens) verwendet. Der Speicher CMEM enthält hochintegrierte dynamische RAM-Bausteine und Fehlerkorrekturschaltungen.

Der Prozessor DCL für Signalisierungssteuerung dient dem Abwickeln des HDLC-Protokolls zu den Anschlußeinheiten LTU1... LTUn und der Serviceeinheit SU.

Der Taktgenerator PCG führt die Taktversorgung des Kommunikationssystems durch.

Die Steuerung CS besteht ebenfalls aus einem Datenprozessor (DP), der über einen Multibus (MB) mit einem Speicher (CMEM), dem Schnittstellenprozessor IP der Steuerung CC entsprechenden Ports P1...P4 und mit einem weiteren Schnittstellenprozessor verbunden ist. Der weitere Schnittstellenprozessor ist über eine nicht dargestellte Datenleitung mit dem Schnittstellenprozessor IP der Steuerung CC verbunden.

Bei dem erfindungsgemäßen Kommunikationssystem sind wie schon erwähnt, sogenannte Pseudoteilnehmerports (PTP1... PTPy) eingerichtet. Diese Ports sind rufnummernindividuelle, virtuelle Einheiten, denen externe und interne Anrufe zugeordnet werden. Damit besteht die Möglichkeit, daß eine Mehrzahl von Systembenutzern, die über kein eigenes Faksimileendgerät FAX1, FAX2 verfügen, über die Pseudoteilnehmerports für sie bestimmte empfängerindividuelle Faxnachrichten von externen oder internen Anrufern erhalten können. Die den rufnummernindividuellen Pseudoteilnehmerports zugeordneten Fernmeldeverbindungen werden, wie noch beschrieben wird, auf empfängerindividuelle Speicherbereiche FMS1...FMSy geleitet und sind dort von einem der im System vorhandenen internen Faksimileendgeräten FAX1, FAX2 abrufbar.

Ein der Steuerung CC des Kommunikationssystems zugeordnetes Steuerungsprogramm (Speicher CEME) realisiert das bekannte Leistungsmerkmal Anrufumleitung. Für jeden Pseudoteilnehmerport PTP1...PTPy ist als Anrufumleitungsziel ein Teilnehmeranschlußport SLMP1...SLMPx eingestellt. An diese Teilnehmeranschlußports sind keine Endgeräte angeschlossen. Die zweite Steuerung CS, die insbesondere auf dem adaptiven Server FMS implementiert ist, überwacht die Teilnehmeranschlußports SLMP1 ...SLMPx auf eingehende Anrufe. Für die den Pseudoteilnehmerports PTP1...PTPy zugeordneten kommenden Anrufe, die die Rufnummerninformation bzw. eine den Pseudoteilnehmerport bezeichnende Information umfassen, bildet die Steuerung CS in Abhängigkeit dieser Informationen eine Information, die eine a/b-Anschluß-Adresse bezeichnet. Diese Information besteht insbesondere aus einer Adresse der Ports P1...P4. Hierzu greift die Steuerung CS auf eine in der Figur nicht dargestellte Tabelle zu, die die Zuordnung zwischen Rufnummern bzw. Pseudoteilnehmerport-Bezeichnungen einerseits und Adressen der Ports P1... P4 andererseits angibt. Diese Portadresseninformation führt die Steuerung CS der Steuerung CC zu, die entsprechend dieser Information die an den Teilnehmeranschlußports SLMP1...SLMPx anstehenden Rufe auf die durch die Adressen bezeichneten Ports P1...P4 umkoppelt. Der in dem Server FMS zugegangene Anruf mit der Rufnummerninformation bzw. mit der Pseudoteilnehmerportidentifikation wird von der Steuerung CS in Abhängigkeit dieser Information auf einen zugeordneten pseudoteilnehmerport- und empfängerindividuellen Speicherbereich FMS1... FMSy umgekoppelt. Damit ist die eigentliche Fernmeldeverbindung hergestellt und die Einspeicherung von Nachrichten, die im Rahmen dieser Fernmeldeverbindung übertragen werden, in den Speicherbereich freigegeben.

Die Abspeicherung von Fernmeldenachrichten für einen Systembenutzer, der beispielsweise nur über ein digitales Fernsprechendgerät T11...Tlx nicht jedoch über ein eigenes Faxgerät verfügt, wird von der Steuerung CS im Zusammenwirken mit der Steuerung CC dem jeweiligen Systembenutzer beispielsweise auf dem Display seines digitalen Fernsprechendgerätes signalisiert. Dazu wird eine die Signalisierung zwischen einer externen Datenverarbeitungsanlage (PC) und einem Fernsprechendgerät realisierende bekannte Dialogsoftwareschnittstelle benutzt. Der entsprechende Meldungsaustausch erfolgt über die Datenleitung, die die beiden Steuerungen CC und CS verbindet. Zu der Realisierung greift die Steuerung CC auf eine in der Figur nicht dargestellte Tabelle zu, in der die Zuordnung zwischen internen Adressen (Rufnummern) der Fernsprechendgeräte Tll... Tlx und den Speicherbereichen FMS1...FMSy eingespeichert ist. Der Abruf von Fernmeldenachrichten aus einem Speicherbereich FMS1...FMSy erfolgt in der Weise, daß in ein internes Endgerät, z. B. FAX1, eine Kennzahl eingegeben wird, die das Auslesen von Fernmeldenachrichten aus den Speicherbereichen bezeichnet, sowie eine speicherbereichindividuelle Adresse, unter welcher die abzurufenden Fernmeldenachrichten abgespeichert sind. Die erste Steuerung CC, die diese Informationen aufnimmt, reicht diese Informationen, ergänzt um die Adresse (Rufnummer) des abrufenden internen Endgeräts, an die zweite Steuerung CS weiter. Die Steuerung CS führt den Auslesebefehl aus und übergibt die ausgelesene Fernmeldenachricht mit der Adresse des abrufenden internen Endgeräts an die erste Steuerung CC, die die abgerufenen Fernmeldenachrichten dem betreffenden Endgerät zuführt.

Die Pseudoteilnehmerports PTP1...PTPy können auch in der Weise verwendet werden, daß für interne Endgeräte FAX1, FAX2, Tll, Tlx im Besetzt- oder Störungsfall eine Anrufumleitung auf diese Ports aktivierbar ist. Damit werden Anrufe, die im Frei- bzw. Nichtstörungsfall den internen Endgeräten direkt zugeführt werden, den Pseudoteilnehmerports zugeordnet. Damit lassen sich im Rahmen der dann hergestellten Verbindungen übertragene Nachrichten in empfängerindividuelle Speicherbereichen FMS1...FMSy abspeichern.

## Patentansprüche

1. Kommunikationssystem zur Herstellung von Fernmeldeverbindungen, insbesondere Faksimile- und Fernsprechverbindungen, mit einer ersten Steuerung (CC), mit internen Fernmeldeendgeräten (FAX1, FAX2, Tll, Tlx) und einer Fernmeldenachrichten zwischenspeichernden Speichereinrichtung (FMS), die eine Mehrzahl empfängerindividueller Speicherbereiche (FMS1...FMSy) umfaßt,
**dadurch gekennzeichnet**,
daß die Speichereinrichtung (FMS) über a/b-Anschlüsse (P1... P4) mit dem Kommunikationssystem verbindbar ist, daß das Kommunikationssystem mit Amtsleitungen (AL1, AL2, ALn) verbindbare, rufnummernindividuelle Pseudoteilnehmerports (PTP1...PTPy) aufweist, daß ein der ersten Steuerung (CC) zugeordnetes Steuerprogramm in der Weise ausgestaltet ist, daß den Pseudoteilnehmerports (PTP1...PTPy) zugeordnete Anrufe auf Teilnehmeranschlußports (SLMP1...SLMPx) mit einer den jeweiligen Pseudoteilnehmerport (PTP1... PTPy) bezeichnenden Information umgeleitet werden, daß eine zweite Steuerung (CS) in Abhängigkeit der einen Pseudoteilnehmerport (PTP1...PTPy) bezeichnenden Information eine a/b-Anschluß-Adresse (P1...P4) bildet, daß die erste Steuerung (CC) einen an den Teilnehmeranschlußports (SLMP1...SLMPx) mit der einen Pseudoteilnehmerport (PTP1 ... PTPy) bezeichnenden Information anstehenden Anruf entsprechend der a/b-Anschluß-Adresse (P1...P4) auf den zugehörigen a/b-Anschluß (P1...P4) umkoppelt und daß die zweite Steuerung (CS) den Anruf auf einen pseudoteilnehmerport- und empfängerindividuellen Speicherbereich (FMS1...FMSy) umkoppelt, damit die Fernmeldeverbindung herstellt und die Einspeicherung von im Rahmen der Fernmeldeverbindung übertragenen Fernmeldenachrichten in den Speicherbereich (FMS1...FMSy) freigibt.

2. Kommunikationssystem nach Anspruch 1,
**dadurch gekennzeichnet**,
daß für interne Endgeräte (FAX1, FAX2, Tll, Tlx) im Besetzt-oder Störungsfall eine Anrufumleitung auf die Pseudoteilnehmerports (PTP1...PTPy) aktivierbar ist.

3. Kommunikationssystem nach Anspruch 1 oder 2,
**dadurch gekennzeichnet**,
daß das der Steuerung (CC) zugeordnete Programm in der Weise ausgestaltet ist, daß ausgelöst durch die Eingabe einer das Auslesen von Fernmeldenachrichten bezeichnenden Kennzahl und einer speicherbereichsindividuellen Adresse in ein internes Fernmeldeendgerät (FAX1, FAX2, Tll, Tlx) die erste Steuerung (CC) die zweite Steuerung (CS) zum Auslesen der entsprechenden Fernmeldenachrichten veranlaßt und daß die erste Steuerung (CC) die ausgelesene Fernmeldenachricht dem internen Fernmeldeendgerät (FAX1, FAX2, Tll, Tlx) zuführt.

## Claims

1. Communications system for establishing telecommunication connections, especially facsimile and telephone connections, with a first control system (CC), with internal telecommunication terminals (FAX1, FAX2, Tll, Tlx) and a memory device (FMS) which buffer-stores telecommunication messages and comprises a plurality of receiver-specific memory areas (FMS1...FMSy), characterized in that the memory device (FMS) can be connected via a/b connections (P1...P4) to the communications system, in that the communications system has pseudo subscriber ports (PTP1...PTPy) which can be connected to exchange lines (AL1, AL2, ALn) and are specific to call numbers, in that a control program assigned to the first control system (CC) is designed in such a way that calls assigned to the pseudo subscriber ports (PTP1...PTPy) are diverted to subscriber line ports (SLMP1...SLMPx) with an item of information designating the respective pseudo subscriber port (PTP1...PTPy), in that a second control system (CS) forms an a/b connection address (P1...P4) in dependence on the information designating a pseudo subscriber port (PTP1...PTPy), in that the first control system (CC) switches a call present at the subscriber line ports (SLMP1...SLMPx) with the information designating a pseudo subscriber port (PTP1...PTPy) in a way corresponding to the a/b connection address (P1...P4) to the associated a/b connection (P1...P4), and in that the second control system (CS) switches the call to a memory area (FMS1... FMSy) specific to the pseudo subscriber port and specific to the receiver, in order that the telecommunication connection is established and the storing in the memory area (FMS1...FMSy) of telecommunication messages transmitted during the course of the telecommunication connection is released.

2. Communications system according to Claim 1, characterized in that a call diversion can be activated to the pseudo subscriber ports (PTP1...PTPy) for internal terminals (FAX1, FAX2, T11, Tlx), in the case of the line being busy or there being a fault.

3. Communications system according to Claim 1 or 2, characterized in that the program assigned to the control system (CC) is designed in such a way that, triggered by the input of a code number designating the reading-out of telecommunication messages and of a memory-area-specific address into an internal telecommunication terminal (FAX1, FAX2, T11, T1x), the first control system (CC) causes the second control system (CS) to read out the corresponding telecommunication messages, and in that the first control system (CC) feeds the read-out telecommunication message to the internal telecommunication terminal (FAX1, FAX2, T11, Tlx).

## Revendications

1. Système de communication pour l'établissement de liaisons de télécommunication, notamment de liaison de facsimilés et téléphoniques, comportant une première commande (CC), des terminaux (FAX1, FAX2, T11, T1x) internes de télécommunication et un dispositif (FMS) de mémorisation, qui mémorise temporairement des informations de télécommunication et qui comprend une pluralité de zones (FMS1 à FMSy) de mémoire propres à chaque récepteur,
caractérisé en ce que le dispositif (FMS) de mémorisation peut être relié par l'intermédiaire de raccordement a/b (P1 à P4) au système de communication, le système de communication comporte des accès (PTP1 à PTPy) de pseudo-abonnés propres à chaque numéro d'appel et pouvant être reliés à des lignes réseaux (AL1, AL2, ALn), un programme de commande associé à la première commande (CC) est tel que des appels associés aux accès (PTP1 à PTPy) de pseudo-abonnés soient transférés à des accès (SLMP1 à SLMPx) de raccordement d'abonnés avec une information désignant l'accès respectif (PTP1 à PTPy) de pseudo-abonnés, une seconde commande (CS) forme, en fonction de l'information désignant un accès (PTP1 à PTPy) de pseudo-abonnés, une adresse (P1 à P4) de raccordement a/b, la première commande (CC) commute un appel se trouvant sur les accès (SLMP1 à SLMPx) de raccordement d'abonnés avec 1' information désignant un accès (PTP1 à PTPy) de pseudo-abonné, en fonction de l'adresse (P1 à P4) du raccordement a/b, sur le raccordement a/b associé (P1 à P4) et la seconde commande (CS) commute l'appel sur une zone (FMS1 à FMSy) de mémoire propre à chaque accès de pseudo-abonné et à chaque récepteur, pour que la liaison de télécommunication s'établisse et que la mémorisation d'informations de télécommunication transmises pendant la liaison de télécommunication se libère dans la zone (FMS1 à FMSy) de mémoire.

2. Système de communication suivant la revendication 1,
caractérisé en ce que
un transfert d'appel vers les accès (PTP1 à PTPy) de pseudo-abonnés peut être activé pour des terminaux internes (FAX1, FAX2, T11, T1x) en cas d'occupation ou de perturbation.

3. Système de communication suivant la revendication 1 ou 2,
caractérisé en ce que
le programme associé à la commande (CC) est tel que la première commande (CC), déclenchée par l'introduction d'un nombre caractéristique désignant la lecture d'informations de télécommunication et d'une adresse, propre à chaque zone de mémoire, dans un terminal interne de télécommunication (FAX1, FAX2, T11, T1x), amène la seconde commande (CS) à lire les informations correspondantes de télécommunication et la première commande (CC) envoie l'information de télécommunication lue au terminal interne de télécommunication (FAX1, FAX2, T11, T1x).
